# EUROPEAN PATENT SPECIFICATION

(11) **EP 2 570 275 B1**
(45) Date of publication and mention of the grant of the patent: **02.07.2014**
(21) Application number: 12183820.5
(22) Date of filing: 11.09.2012
(51) Int. Cl.: B60C 15/06, B60C 15/00, C08K 5/05, C08K 5/10, C08K 5/20

(54) **Tire with outside-in, turn-up ply construction**
Reifen mit nach innen umgeschlagener Lagenkonstruktion
Pneu avec l'extérieur vers l'intérieur, construction de pli de retournement

(30) Priority: 13.09.2011 US 201113231254
(43) Date of publication of application: 20.03.2013
(73) Proprietor: The Goodyear Tire & Rubber Company, Akron, OH 44316-0001 (US)
(72) Inventor: Sandstrom, Paul Harry, Cuyahoga Falls, OH Ohio 44223 (US)
(74) Representative: Kutsch, Bernd

(56) References cited:
- US-A1- 2001 050 128
- US-B2- 7 231 951

## Description

### Field of the Invention

This invention relates to a pneumatic tire having a carcass ply extending to and turning around a tire bead with an outside-in, turn-up configuration.

### Background of the Invention

Vehicular tires are composed of complex constructions which conventionally include a circumferential tread, two sidewalls individually extending radially inward from a periphery of said tread to a pair of spaced apart relatively inextensible beads and an underlying carcass supporting said tread and sidewalls. The carcass contains at least one and usually several cord reinforced rubber plies extending from bead to bead through the crown region of the tire to promote dimensional and handling stability for the tire.

Carcass ply construction for pneumatic tires is typically provided in a form of an inside-out turn-up configuration with a cord reinforcement-containing rubber carcass ply extending radially inward from the inside of the tire carcass in the sidewall region to and around a bead of the tire with its turn-up end portion terminating radially outward and anchored in the tire's outer sidewall. Such carcass ply configuration might sometimes be referred to as an inside-out turn-up configuration, namely with its carcass ply extending from the inside of the tire and turning around a tire bead with the end of the ply turning up into the tire's outer sidewall portion. Such carcass ply configuration is well known to those having skill in such art.

Further, the construction of such tire may be accomplished, for example, by building the tire components on a building drum to result a shape similar to an open ended barrel with the tire bead portions on the outer ends of the barrel.

As the uncured barrel shaped tire construction is expanded and transformed to a somewhat donut shape, the aforesaid outside-in, turn-up ply configuration causes the carcass ply to be partially pulled around its associated bead which, in turn, pulls the end of the aforesaid turn-up ply in the outer sidewall region toward the bead portion of the tire before the tire assembly is cured and the tire assembly, including the carcass ply fixed in position for the resultant cured tire.

In contrast to such inside-out ply configuration, it is desired to provide a pneumatic tire with a reversed ply direction around the bead, namely, with an outside-in turn-up ply configuration where a cord reinforcement-containing rubber carcass ply extends from the outside of the bead to and around the bead of the tire with the carcass end portion terminating in the tire's inner tire carcass.

For such outside-in turn-up ply configuration, after the tire is built on a tire building drum to form the uncured tire having the aforesaid barrel-like configuration, the tire assembly is expanded to a donut shape and the aforesaid outside-in, turn-up ply configuration causes the carcass ply to be partially pulled around its associated bead which, in turn, pulls the end of the aforesaid turn-up ply in the inner carcass region of the tire toward the bead portion of the tire before the tire assembly is cured and the tire assembly, including the carcass ply fixed in position for the resultant cured tire.

To counteract and thereby reduce or eliminate such movement of the carcass ply around the bead during the shaping of the uncured tire, it has heretofore been proposed to divide the carcass ply into a form of a stress-relieving split ply construction in the crown region of the tire. In such manner, the carcass ply is provided with divided and separated carcass ply ends, which is might sometimes be referred to as split ply construction, in the crown region of the tire, to allow movement of the carcass ply split ends in the tire crown region instead of the tire's bead region during the aforesaid shaping of the uncured tire. For example, see US-A- 7,017,635.

An advantage of such outside-in, turn-up carcass configuration, according to US-A-7,017,635 may be, for example, to provide a reduction in tire weight resulting from less needed rubber in the outer sidewall portion of the tire which would, in turn, enable an associated reduction in material cost for the tire. It is to be appreciated that even a small decrease in tire weight, with its associated small reduction in tire cost, can promote improved associated vehicular fuel economy, reduction in internal heat generation as the tire is being worked as well as a reduction in cost of manufacturing of the tire.

For this invention, it is desired to provide a novel outside-in, turn-up carcass ply configuration without such aforesaid split-ply construction.

In the description of this invention, the term "phr" relates to parts by weight per 100 parts by weight rubber (phr) unless otherwise indicated.

### Summary and Practice of the Invention

The invention relates to a tire in accordance with claim 1.

Dependent claims refer to preferred embodiments of the invention.

Preferably, the present invention relates to a pneumatic rubber tire, particularly a passenger tire, comprising a circumferential tread, two sidewalls individually extending radially inward from a periphery of said tread to a pair of spaced apart relatively inextensible beads and an underlying carcass supporting said tread and sidewalls, wherein said carcass contains at least one cord reinforced rubber ply extending from bead to bead through the crown region of the tire, wherein said cord reinforced carcass ply extends from the outside of said bead to and around said bead and where the end portion of said ply terminates in the tire's inner tire carcass, wherein a self lubricating rubber layer is positioned between said carcass ply and its associated bead to facilitate movement of the carcass ply around said bead during shaping of the uncured rubber tire.

The tire carcass ply construction in accordance with the invention is referred to herein as an outside-in, turn-up configuration.

The tire carcass ply construction in accordance with the invention is preferably not configured with and is therefore exclusive of a carcass split ply construction.

The bead core of the tire typically comprises a plurality of metal filaments which are typically twisted, or cabled together.

In particular, such combination of outside-in turn up carcass ply configuration and said intermediate self lubricating rubber layer is provided to enable movement of the configured carcass ply around the bead component during shaping of the uncured, or green, rubber tire without necessitating a split ply construction in the crown region of the tire.

Historically, a self lubricating rubber layer has heretofore been suggested for positioning on an outer portion of a tire bead component to enable movement of the bead against an associated rigid tire rim of a vehicular wheel. For example, see US-A- 7,231,951.

In practice, the self lubricating rubber layer preferably comprises a self lubricating rubber composition containing at least one diene-based elastomer and from 1 to 20, alternately from 2 to 10, phr of at least one additive comprising at least one of alcohols of formula (I), esters of formula (II) and amides of formula (III):

R₁-OH (I)

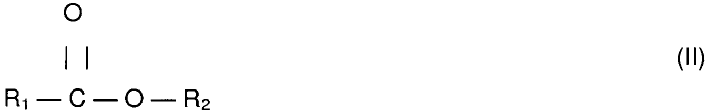

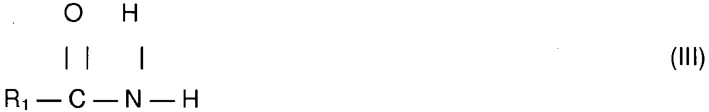

wherein R₁ and R₂ are independently selected from alkyl radicals having from 12 to 36 carbon atoms, alkenyl radicals having from 12 to 36 carbon atoms and alkadienyl radicals having 12 to 36 carbon atoms, so long as said additive promotes a self lubricating quality for the uncured rubber composition of said intermediate rubber layer.

In one embodiment, the alcohol of formula (I) may comprise, for example, 1-dodecanol (lauryl alcohol), 1-tetradecanol (myristyl alcohol), 1-hexadecanol (cetyl alcohol), 1-octadecanol (stearyl alcohol), 1-eicosanol (arachidyl alcohol), 1-docosanol (behenyl alcohol), 1-tetracosanol, 1-hexacosanol, 1-octaconsanol, 1-triacontanol (melissyl alcohol), 1-dotriacontanol, 1-tetratriacontanol and mixtures thereof.

In one embodiment, the alcohol of formula (I) comprise 1-octadecanol.

An exemplary octadecanol for the alcohol of formula (I) may comprise, for example, CO-1895 Stearyl Alcohol from Procter & Gamble Chemicals. Such product reportedly has a melting point of about 58°C and a distribution (percent by weight), determined by gas chromatography, of about 0.1 percent C₁₄, about 1.3 percent C₁₆, about 95.5 percent C₁₈, 95.5 percent; and about 0.9 percent C₂₀.

In one embodiment, it is envisioned that the ester of formula (II) may comprise, for example, a product of esterification of C₁₂-C₃₆ fatty acids with C₁₂-C₃₆ alcohols according to procedures known to those having skill in such art. For example, it is envisioned that such ester may be formed by reaction of the C₁₂-C₃₆ fatty acid with an aliphatic alcohol having from 12 to 36 carbon atoms under esterification conditions. For example, it is also envisioned that such ester may be formed by reaction of a C₁₂-C₃₆ fatty acid with a dihydric or polyhydric alcohol, for example, glycerin, ethylene glycol, propylene glycol, pentaerythritol, and polyethylene glycol, and the like.

In one embodiment, it is envisioned that the ester may comprise at least one of a fatty acid ester of an aliphatic alcohol including dodecyl alcohol, tridecyl alcohol, tetradecyl alcohol, pentadecyl alcohol, hexadecyl alcohol, heptadecyl alcohol, octadecyl alcohol, nonadecyl alcohol, eicosyl alcohol, heneicosyl alcohol, docosyl alcohol or mixtures thereof.

In one embodiment, it is envisioned that the ester may comprise any of dodecyl, tridecyl, tetradecyl, pentadecyl, hexadecyl, heptadecyl, octadecyl, nonadecyl, eicosyl, heneicosyl, or docosyl esters of any of stearic, oleic, palmitic, 9,12-linoleic, 9,11-linoleic (conjugated linoleic), pinolenic, eicosenoic, palmitoleic, magaric, octadecadienoic, or octadectrienoic acids. For example, in one embodiment, it is envisioned that the ester comprises a fatty acid ester of dodecyl alcohol, hexadecyl alcohol or octadecyl alcohol.

In one embodiment, the ester comprises octadecyl octadecanoate (also known as stearyl stearate).

In one embodiment, it is envisioned that the amide of the formula (III) comprises for example, an amide of a saturated or unsaturated monovalent amine, or saturated or unsaturated polyvalent amine, for example, caprylamine, laurylamine, palmitylamine, stearylamine, oleylamine, myristylamine, methylenediamine, ethylenediamine, hexamethylenediamine, and ammonia, and the like. For example, it is envisioned that the amide may be caprylamide, laurylamide, palmitylamide, stearylamide, oleamide, myristylamide, and the like.

### Brief Description of Drawings

In the accompanying drawings:
Figure 1 (FIG 1) is a cross-sectional view of a general construction of a prior art tire with a carcass ply having a more conventional inside-out, turn-up configuration.
Figure 2 (FIG 2) is a schematic view of the prior art tire of FIG 1.
Figure 2A (FIG 2A) is a perspective view of a portion of an uncured prior art tire of FIG 2 built onto a building drum where the carcass ply is turned around a bead of the tire in what will become an inside-out, turn-up configuration.
Figure 3 (FIG 3) is a schematic view of the prior aArt tire of FIG 1 having a carcass ply where the carcass ply is of a split ply configuration in the crown portion of the tire (e.g. US-A- 6,740,280);
Figure 3A (FIG 3A) is a perspective view of a portion of an uncured prior art tire of FIG 3 built onto a building drum with a split ply configuration.
Figure 4 (FIG 4) is a schematic view of a tire of the present invention depicting a carcass ply configured with an outside-in, turn-up construction where the carcass ply is presented without a split ply configuration and where an internal self lubricating rubber layer is positioned between its bead portion and carcass ply to enable movement of said carcass ply during shaping of the uncured tire.
Figure 4A (FIG 4A) is a perspective view of a portion of an uncured tire of FIG 4 built onto a building drum where the carcass ply is turned around a bead of the tire in what will become an outside-in, turn-up configuration with the self lubricating rubber layer positioned between its bead portion and carcass ply.

### In The Drawings

In the drawings, in general, some of the same numbers are used for the same components or items in the several views.

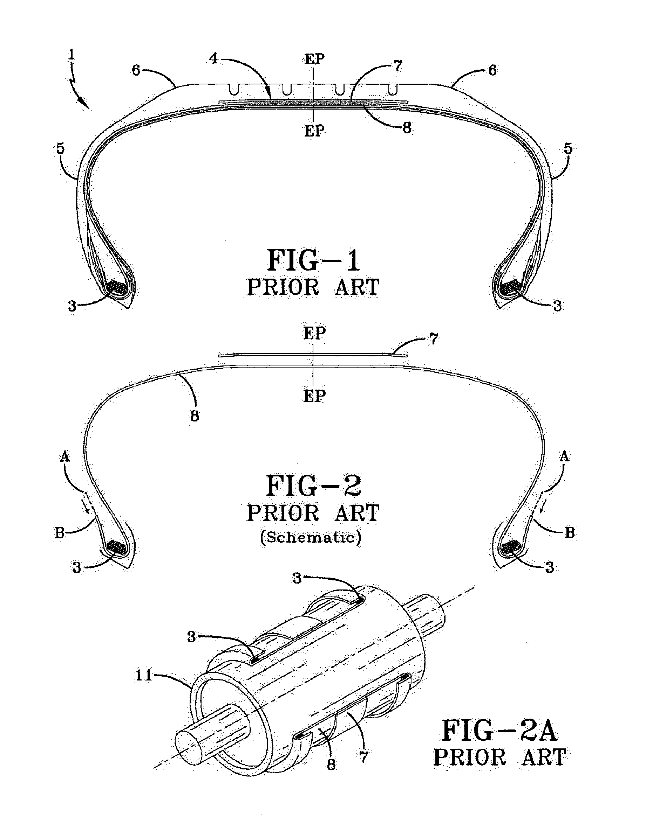

With reference to FIG 1, there is illustrated a cross-sectional view of the general construction of a Prior Art tire 1. The tire has a circumferential tread portion 6 and two individual sidewalls 5 extending from peripheral portions from said tread 6 to two spaced apart bead portions 3 together with a supporting carcass 8 for said tread 6 and sidewalls 5. The tire contains at least one metal cord reinforced rubber belt 7 underlying said tread 6.

The carcass 8 comprises at least one cord reinforced rubber carcass ply 8 extending from said bead portion 3 to bead portion 3 through the crown region 4 of the tire 1.

The bead portions or bead cores 3 contain relatively inextensible metal cords, or bundle of metal filaments and may optionally contain a protective layer, such as for example a nylon layer, wrapped around said bundle of filaments.

For prior art FIGS 1, 2 and 2A, relating to a prior art tire, the cord reinforced carcass ply 8 turns around the bead portions 3 from an inside portion of the tire with its ends extending to and terminating radially outward from the bead portions 3 to an outer part of the sidewall 5 in what is referred to herein as an inside-out, turn-up carcass ply configuration.

In schematic prior art FIG 2, movement of the end of the turn up end portion of carcass ply 8 from point A to point B is depicted for when the carcass ply 8 is physically pulled within the uncured tire assembly as the uncured tire 1 is shaped from a barrel-like configuration similar to FIG 2A to the donut-like configuration similar to FIG 2.

For prior art FIG 2A, a tire building drum 11 is depicted with carcass ply 8 built onto the drum 11 and which extends to and around beads 3 in an inside-out, turn up configuration. A metal cord reinforced circumferential belt ply 7 is also depicted.

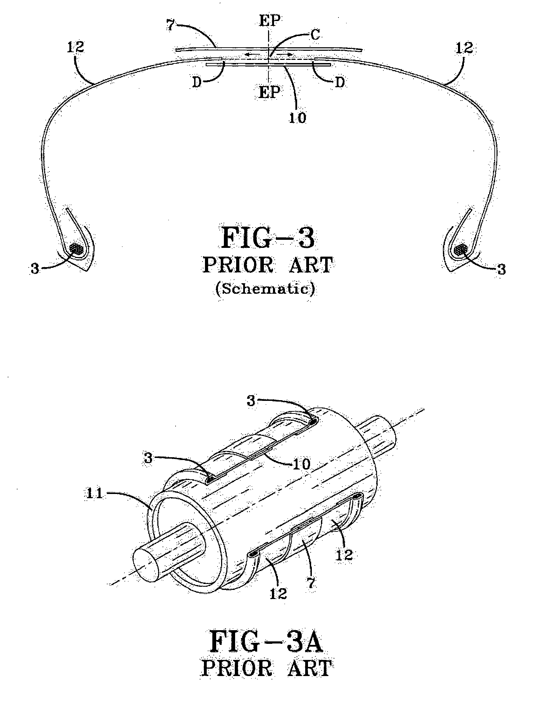

For prior art FIG 3 a split ply carcass ply 12 configuration is shown with its separated ends presented in the crown region of the tire 1 with an inserted overlapping cord reinforced short ply 10 positioned to bridge and overlap the ends of the split ply 12. As the uncured tire assembly is shaped from a barrel-like configuration similar to prior art FIG 3A to a donut-like configuration similar to prior art FIG 3, movement of the ends of the split ply from point C to point D occurs which enables the turn-ends of the carcass ply 12 to remain stationary without significant distortion.

For prior art FIG 3A, a tire building drum 11 is depicted with carcass split ply 12 with separated ends and a short carcass ply 10 overlapping the ends of carcass ply 12 built onto the drum 11 for which carcass ply 12 extends to and around beads 3 in an outside-in, turn up configuration. A metal cord reinforced circumferential belt ply 7 is also depicted.

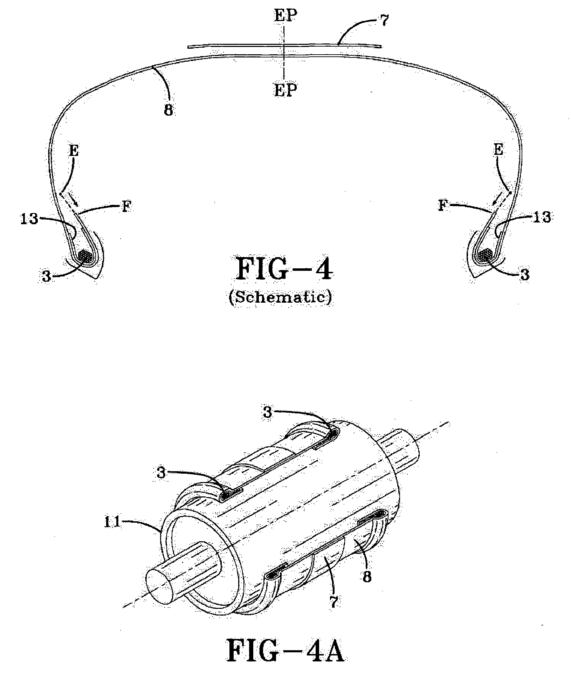

For FIG 4 relating to the tire of this invention, the cord reinforced carcass ply 8 extends from an outer portion of the tire around the bead portions 3 with its ends terminating in an inner outer part of the tire carcass 8 in what is referred to herein as an outside-in, turn-up carcass ply configuration with a self lubricating rubber layer 13 positioned between its bead portion 3 and carcass ply 8 to facilitate movement of the turn-up end portion of carcass ply 8 from point E to point F for when the uncured tire 1 is shaped from a barrel-like configuration similar to FIG 4A to the donut-like configuration of FIG 4.

For FIG 4A, a tire building drum 11 is depicted with carcass ply 8 built onto the drum 11 and which extends to and around beads 3 in an outside-out, turn up configuration. A metal cord reinforced circumferential belt ply 7 is also depicted.

The EP of FIGs 1, 2, 3 and 4 relates to the equatorial plane (EP) of the respective tires.

In one embodiment, the rubber to be combined with the additive selected from alcohols of formula I, esters of formula II, and amides of formula III is at least one conjugated diene-based elastomer comprising at last one polymer selected from polymers of at least one of isoprene and 1,3-butadiene and polymers of styrene and at least one of isoprene and 1,3-butadiene. In one embodiment, rubber may be a blend of two or more of such elastomers.

Representative of such elastomers are, for example, cis 1,4-polyisoprene, cis 1,4-polybutadene, styrene/butadiene copolymers and styrene/isoprene/butadiene terpolymers.

For example, such styrene/butadiene copolymers may be emulsion polymerization prepared (E-SBR) where styrene and 1,3-butadiene are copolymerized as an aqueous emulsion of may be prepared by organic solution copolymerization (S-SBR). The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

The solution polymerization prepared SBR (S-SBR) typically has a bound styrene content in a range of 5 to 50, alternatively 9 to 36, percent. The S-SBR can be conveniently prepared, for example, by organo lithium catalyzation in the presence of an organic hydrocarbon solvent.

The cis 1,4-polybutadiene rubber (BR) is often considered to be beneficial for a purpose of enhancing the tire wear. Such BR can be prepared, for example, by organic solution polymerization of 1,3-butadiene. The BR may be conveniently characterized, for example, by having at least a 90 percent cis 1,4-content.

Conventional reinforcing fillers such as for example rubber reinforcing carbon black and rubber reinforcing amorphous synthetic silica such as, for example, precipitated silica may be also present. The amount of such reinforcing fillers may range from 10 to 250 phr. In one embodiment, the filler is present in an amount ranging from 20 to 100 phr.

Various commercially available silicas may be used, such as, only for example herein, and without limitation, silicas commercially available from PPG Industries under the Hi-Sil trademark with designations 210 and 243; silicas available from Rhone-Poulenc, with, for example, designations of Z1165MP and Z165GR; and silicas available from Degussa AG with, for example, designations VN2 and VN3.

Commonly employed rubber reinforcing carbon blacks might be used, representative of which may include those ASTM referenced as N110, N115, N121, N134, N220, N231, N234, N242, N293, N299, N315, N326, N330, M332, N339, N343, N347, N351, N358, N375, N539, N550, N582, N630, N642, N650, N660, N683, N754, N762, N765, N774, N787, N907, N908, N990 and N991. Such rubber reinforcing carbon blacks generally have iodine absorption values ranging from 9 to 170 g/kg and DBP number values ranging from 34 to 150 cc/100 g.

In one embodiment the rubber composition for use in the tire component may additionally contain silica coupling agent having a moiety reactive with hydroxyl groups (e.g. silanol groups) on said amorphous synthetic silica (e.g. precipitated silica) and another different moiety interactive with said conjungated diene based elastomer(s).

For example, said coupling agent may comprise a bis(3-trialkoxysilylalkyl) polysulfide having an average of from 2 to 4, alternately from 2 to 2.6, or alternately from 3.2 to 3.8, connecting sulfur atoms in its polysulfidic bridge or an organoalkoxymercaptosilane.

Representative of such silica coupler is comprised of a bis(3-triethoxysilylpropyl) polysulfide.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur vulcanizing agent is elemental sulfur. The sulfur vulcanizing agent may be used in an amount ranging from 0.5 to 8 phr. Typical amounts of tackifier resins, if used, comprise 0.5 to 10 phr. Typical amounts of processing aids comprise 1 to 50 phr. Such processing aids can include, for example, aromatic, naphthenic, and/or paraffinic processing oils. Typical amounts of antioxidants comprise 1 to 5 phr. Representative antioxidants may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 1 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator is in one embodiment a guanidine, dithiocarbamate or thiuram compound.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber and compound is mixed in one or more non-productive mix stages. If the rubber composition contains a sulfur-containing organosilicon compound (silica coupling agent), one may subject the rubber composition to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

Vulcanization (curing) of the tire is generally carried out at conventional temperatures ranging from 100°C to 200°C. Any of the usual vulcanization processes may be used such as heating in a press or mold, heating with superheated steam or hot air.

### EXAMPLE I

In this Example, an alcohol of formula I (octadecanol) and an ester (stearyl stearate) of formula II were evaluated in a rubber composition containing reinforcing filler as rubber reinforcing carbon black.

Rubber compositions containing the materials illustrated in Table 1 were prepared using four individual, sequential mixing stages; namely three non-productive mix stages (without sulfur curative) followed by one productive mix stage (where sulfur curative is added). The non-productive stages were individually mixed for about four minutes to a rubber temperature of 160°C. The productive stage was mixed for two minutes, and the drop temperature (temperature of removal from the internal rubber mixer) for the productive mix stage was 115°C, there the rubber composition was allowed to cool to below 40°C between mix stages.

The rubber compositions are identified as rubber Samples A through H. Samples A, D, E and H are considered as controls due to the absence of the alcohol or ester.

Rubber Samples B, C, F and G contained the alcohol or ester with Samples B and C containing the ester and Samples F and G containing the alcohol.

Table 2 illustrates various physical properties of the cured rubber Samples A through H.

Where appropriate, the Samples were cured at about 150°C for about 32 minutes.

The coefficient of friction (COF) test is done according to ASTM D-1894 on a Model SP-2000 Slip/Peel Tester from IMASS Inc. Samples are tested at 15.24 cm per minute using a 200 g sled. The COF is measured against a polished aluminum surface.

**Table 1**

| | Control | | | Control | Control | | | Control |
|---|---|---|---|---|---|---|---|---|
| Sample | A | B | C | D | E | F | G | H |
| Non Productive Mixing Stage 1 (NP2) | | | | | | | | |
| Natural Rubber | 80 | 80 | 80 | 80 | 80 | 80 | 80 | 80 |
| Carbon black | 12 | 12 | 12 | 12 | 12 | 12 | 12 | 12 |
| Wax | 0.4 | 0.4 | 0.4 | 0.4 | 0.4 | 0.4 | 0.4 | 0.4 |
| Fatty Acid | 2 | 2 | 2 | 2 | 2 | 2 | 2 | 2 |
| Zinc Oxide | 3 | 3 | 3 | 3 | 3 | 3 | 3 | 3 |
| Stearyl stearate | 0 | 2.5 | 5 | 0 | 0 | 0 | 0 | 0 |
| Aromatic oil | 0 | 0 | 0 | 2.5 | 5 | 0 | 0 | 0 |
| Octadecanol | 0 | 0 | 0 | 0 | 0 | 2.5 | 5 | 0 |

| Non Productive Mixing Stage 2 (NP2) | | | | | | | | |
|---|---|---|---|---|---|---|---|---|
| Polybutadiene | 20 | 20 | 20 | 20 | 20 | 20 | 20 | 20 |
| Carbon black | 10 | 10 | 10 | 10 | 10 | 10 | 10 | 10 |
| Silica | 7 | 7 | 7 | 7 | 7 | 7 | 7 | 7 |

| Non Productive Stage 3 | | | | | | | | |
|---|---|---|---|---|---|---|---|---|
| Carbon black | 13 | 13 | 13 | 13 | 13 | 13 | 13 | 13 |
| Antioxidant | 1 | 1 | 1 | 1 | 1 | 1 | 1 | 1 |
| Silane Coupler | 3 | 3 | 3 | 3 | 3 | 3 | 3 | 3 |

| Productive Stage | | | | | | | | |
|---|---|---|---|---|---|---|---|---|
| Antioxidant | 0.5 | 0.5 | 0.5 | 0.5 | 0.5 | 0.5 | 0.5 | 0.5 |
| Zinc Oxide | 1 | 1 | 1 | 1 | 1 | 1 | 1 | 1 |
| Sulfur | 1.9 | 1.9 | 1.9 | 1.9 | 1.9 | 1.9 | 1.9 | 1.9 |
| Accelerator | 1.35 | 1.35 | 1.35 | 1.35 | 1.35 | 1.35 | 1.35 | 1.35 |

**Table 2**

| | Control | | | Control | Control | | | Control |
|---|---|---|---|---|---|---|---|---|
| | A | B | C | D | E | F | G | H |
| Stearyl stearate | 0 | 2.5 | 5 | 0 | 0 | 0 | 0 | 0 |
| Octadecanol | 0 | 0 | 0 | 0 | 0 | 2.5 | 5 | 0 |

| RPA (Rubber Process Analyzer) 500 test | | | | | | | | |
|---|---|---|---|---|---|---|---|---|
| Uncured G' | 142 | 131 | 127 | 139 | 129 | 132 | 122 | 155 |

| Cured G' | | | | | | | | |
|---|---|---|---|---|---|---|---|---|
| 10% strain | 1546 | 1427 | 1331 | 1479 | 1412 | 1443 | 1345 | 1574 |
| Cured TD | | | | | | | | |
| 10% strain | 0.061 | 0.059 | 0.053 | 0.054 | 0.057 | 0.054 | 0.05 | 0.055 |

| Rheometer rest, 150°C | | | | | | | | |
|---|---|---|---|---|---|---|---|---|
| Maximum torque | 20.98 | 19.65 | 18.3 | 19.93 | 19.2 | 19.41 | 18.35 | 20.85 |
| Minimum torque | 1.89 | 1.73 | 1.69 | 1.83 | 1.76 | 1.77 | 1.61 | 2.02 |
| Delta torque | 19.09 | 17.92 | 16.61 | 18.1 | 17.44 | 17.64 | 16.74 | 18.83 |
| T90 | 10034 | 10.56 | 10.76 | 10.81 | 11.25 | 10.25 | 9.85 | 10.48 |

| Stress-Strain test, cured 32 minutes at 150°C | | | | | | | | |
|---|---|---|---|---|---|---|---|---|
| Tensile strength | 21.63 | 23.11 | 23.93 | 23.23 | 22.46 | 22.8 | 23.2 | 24.57 |
| Elongation at Break | 406 | 443 | 468 | 448 | 455 | 439 | 460 | 442 |
| Modulus 300 | 15.14 | 14.14 | 13.34 | 13.96 | 12.99 | 14.08 | 13.27 | 15.15 |

| Hardness, cured 32 minutes at 150°C | | | | | | | | |
|---|---|---|---|---|---|---|---|---|
| 23°C | 66 | 65 | 64 | 63 | 63 | 65 | 64 | 65 |
| 100 °C | 62 | 61 | 58 | 60 | 59 | 60 | 58 | 61 |

| Rebound, cured 32 minutes at 150°C | | | | | | | | |
|---|---|---|---|---|---|---|---|---|
| 23°C | 63 | 62 | 61 | 63 | 62 | 62 | 60 | 64 |
| 100 °C | 73 | 74 | 74 | 74 | 73 | 74 | 74 | 74 |

| Tear strength, 32 minutes at 150°C | | | | | | | | |
|---|---|---|---|---|---|---|---|---|
| 95°C, N | 36 | 47 | 53 | 44 | 49 | 43 | 49 | 36 |

| Tear strength, 32 minutes at150°C | | | | | | | | |
|---|---|---|---|---|---|---|---|---|
| 23°C, N | 143 | 166 | 181 | 181 | 236 | 168 | 178 | 168 |

| Coefficient of Friction | | | | | | | | |
|---|---|---|---|---|---|---|---|---|
| Value | 2.86 | 2.38 | 2.17 | 2.87 | 2.79 | 2.23 | 1.59 | 2.71 |

It can be seen from Table 2 that use of stearyl stearate or octadecanol resulted in reduced coefficient of friction.

### EXAMPLE II

In this Example, two amides of formula III, namely stearamide and oleamide, were evaluated in a rubber composition containing carbon black.

Rubber compositions containing the materials illustrated in Table 3 were prepared using four separate sequential stages of addition (mixing); namely three non-productive mix stages followed by one productive mix stage. The non-productive stages were mixed for four minutes to a rubber temperature of 160°C. The productive stage was mixed for two minutes, and the drop temperature for the productive mix stage was 115°C.

The rubber compositions are identified as rubber Samples I through P. Samples I, L, M and P are considered as controls due to the absence of the amide. Experimental rubber Samples J, K, N and O contained the amide, with Samples J and O containing the stearamide and Samples K and N containing the oleamide.

Table 4 illustrates various physical properties of the cured Samples I through P.

The coefficient of friction (COF) test is done according to ASTM D-1894 on a Model SP-2000 Slip/Peel Tester from IMASS Inc. Samples are tested at 15.24 cm per minute using a 200 g sled. The COF is measured against a polished aluminum surface.

**Table 3**

| | Control | | | Control | Control | | | Control |
|---|---|---|---|---|---|---|---|---|
| Sample | I | J | K | L | M | N | O | E |
| Non Productive Mixing Stage | | | | | | | | |
| Natural rubber | 100 | 100 | 100 | 100 | 100 | 100 | 100 | 100 |
| Polybutadiene | 0 | 0 | 0 | 0 | 12 | 12 | 12 | 12 |
| E-SBR | 0 | 0 | 0 | 0 | 18 | 18 | 18 | 18 |
| Carbon black | 50 | 50 | 50 | 50 | 50 | 50 | 50 | 50 |
| Fatty acid | 2 | 2 | 2 | 2 | 2 | 2 | 2 | 2 |
| Zinc oxide | 5 | 5 | 5 | 5 | 5 | 5 | 5 | 5 |
| Antioxidant | 2 | 2 | 2 | 2 | 2 | 2 | 2 | 2 |
| Stearamide | 0 | 5 | 0 | 0 | 0 | 5 | 0 | 5 |
| Oleamide | 0 | 0 | 5 | 0 | 0 | 0 | 5 | 0 |
| Processing oil | 5 | 0 | 0 | 5 | 5 | 0 | 0 | 5 |
| Productive Mix Stage | | | | | | | | |
| Sulfur | 1.4 | | 1.4 | 1.4 | 1.4 | 1.4 | 1.4 | 1.4 |
| Accelerator | 1 | 1 | 1 | 1 | 1 | 1 | 1 | 1 |

**Table 4**

| | Control | | | Control | Control | | | Control |
|---|---|---|---|---|---|---|---|---|
| | I | J | K | L | M | N | O | P |
| Stearamide | 0 | 5 | 0 | 0 | 0 | 5 | 0 | 5 |
| Oleamide | 0 | 0 | 5 | 0 | 0 | 0 | 5 | 0 |

| RPA 500 Test | | | | | | | | |
|---|---|---|---|---|---|---|---|---|
| Uncured G' | 190 | 181 | 184 | 195 | 204 | 174 | 192 | 183 |

| Cured G' | | | | | | | | |
|---|---|---|---|---|---|---|---|---|
| 10% strain | 1351 | 1370 | 1339 | 1374 | 1474 | 1471 | 1434 | 1418 |

| Cured TD | | | | | | | | |
|---|---|---|---|---|---|---|---|---|
| 10% strain | 0.102 | 0.097 | 0.098 | 0.104 | 0.105 | 0.09 | 0.103 | 0.105 |

| Rheometer 150°C | | | | | | | | |
|---|---|---|---|---|---|---|---|---|
| Maximum torque | 16.68 | 17.79 | 17.32 | 16.66 | 17.71 | 17.83 | 18.01 | 17.25 |
| Minimum torque | 2.6 | 2.53 | 2.62 | 2.55 | 2.62 | 2.37 | 2.63 | 2.47 |
| Delta torque | 14.08 | 15.26 | 14.7 | 14.11 | 14.55 | 15.46 | 15.38 | 14.78 |
| T90 | 12.15 | 6.79 | 6.81 | 11.93 | 16.61 | 8.72 | 8.32 | 16.2 |

| Stress-Strain 32/150°C | | | | | | | | |
|---|---|---|---|---|---|---|---|---|
| Tensile (MPa) | 24 | 24.2 | 24.8 | 23.2 | 22.5 | 22.6 | 23.1 | 22.5 |
| Elongation at break %) | 482 | 450 | 486 | 473 | 462 | 432 | 460 | 464 |
| Modulus 300 (MPa) | 12.8 | 15.2 | 13.5 | 12.8 | 13 | 14.8 | 13.7 | 13 |

| Hardness 32/150°C | | | | | | | | |
|---|---|---|---|---|---|---|---|---|
| 23°C | 64 | 69 | 66 | 64 | 67 | 71 | 68 | 66 |
| 100 °C | 58 | 58 | 57 | 58 | 60 | 60 | 60 | 60 |

| Rebound. 32/150°C | | | | | | | | |
|---|---|---|---|---|---|---|---|---|
| 23°C | 49 | 46 | 44 | 48 | 48 | 45 | 43 | 47 |
| 100°C | 62 | 64 | 63 | 61 | 60 | 61 | 61 | 60 |

| Tear Strength. 32/150°C | | | | | | | | |
|---|---|---|---|---|---|---|---|---|
| 95°C, N | 195 | 145 | 162 | 175 | 119 | 95 | 103 | 109 |

| Tear Strength, 32/150°C | | | | | | | | |
|---|---|---|---|---|---|---|---|---|
| 95°C, N, Aged | 136 | 96 | 137 | 121 | 69 | 61 | 76 | 69 |

| Coefficient of Friction | | | | | | | | |
|---|---|---|---|---|---|---|---|---|
| Value | 3.22 | 2.61 | 1.9 | 3.41 | 3.26 | 1.58 | 1.35 | 2.97 |

It can be seen from Table 4 that use of stearamide or oleamide resulted in reduced coefficient of friction.

## Claims

1. A pneumatic tire comprising a tread (6), two sidewalls (5) individually and separately extending radially inward from a periphery of the tread (6) to a pair of bead cores (3) and a carcass supporting the tread (6) and the sidewalls (5), wherein the carcass comprises at least one cord reinforced rubber ply (8) extending from bead core to bead core through a crown region (4) of the tire (1), **characterized in that** the cord reinforced carcass ply (8) extends from axially outside of the bead cores (3) to a respective ply turnup on the axial inner side of the bead cores (3), and wherein a self lubricating rubber layer (13) is positioned between the carcass ply (8) and at least one of the bead cores (3).

2. The tire of claim 1 wherein said self lubricating rubber layer (13) is positioned between the carcass ply (8) and the bead cores (3) on both sides of the tire (1).

3. The tire of claim 1 or 2 wherein the self lubricating layer facilitates movement of the carcass ply (8) around the bead cores (3) during a shaping of the uncured tire.

4. The tire of at least one of the previous claims wherein the carcass ply (8) extends around the bead cores (3) and/or ends radially above the radial upper end of the bead cores (3).

5. The tire of at least one of the previous claims wherein the tire is a passenger tire and the carcass ply construction is an outside-in, turn-up configuration.

6. The tire of at least one of the previous claims wherein the tire carcass ply construction or the tire carcass is exclusive of a carcass split ply construction or a split carcass ply.

7. The tire of at least one of the previous claims wherein the self lubricating rubber layer (13) comprises a self lubricating rubber composition containing at least one diene-based elastomer and from 1 to 20 phr of at least one additive selected from alcohols of formula (I), esters of formula (II) and amides of formula (III):
R₁-OH (I) 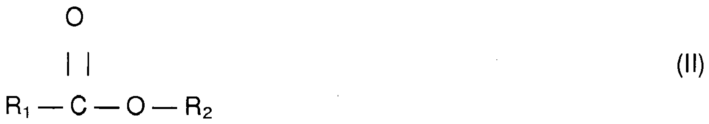 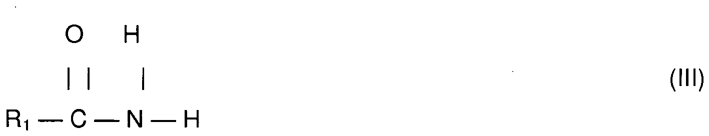
wherein R₁ and R₂ are independently selected from alkyl radicals having from 12 to 36 carbon atoms, alkenyl radicals having from 12 to 36 carbon atoms and alkadienyl radicals having 12 to 36 carbon atoms.

8. The tire of claim 7 wherein the additive promotes a self lubricating quality for the uncured rubber composition of the self lubricating rubber layer.

9. The tire of claim 7 or 8 wherein the additive is the alcohol of formula (I) and comprises at least one of 1-dodecanol (lauryl alcohol), 1-tetradecanol (myristyl alcohol), 1-hexadecanol (cetyl alcohol), 1-octadecanol (stearyl alcohol), 1-eicosanol (arachidyl alcohol), 1-docosanol (behenyl alcohol), 1-tetracosanol, 1-hexacosanol, 1-octaconsanol, 1-triacontanol (melissyl alcohol), 1-dotriacontanol, 1-tetratriacontanol and mixtures thereof.

10. The tire of claim 9 wherein the additive is 1-octadecanol having a melting point of about 58°C and a distribution, by weight, determined by gas chromatography, of about 0.1 percent C₁₄, about 1.3 percent C₁₆, about 95.5 percent C₁₈, 95.5 percent; and about 0.9 percent C₂₀.

11. The tire of claim 7 or 8 wherein the additive comprises the ester of formula (II) and wherein the ester is:
(i) a product of esterification of C₁₂-C₃₆ fatty acids with C₁₂-C₃₆ alcohols; or (ii) is formed by reaction of the C₁₂-C₃₆ fatty acid with an aliphatic alcohol having from 12 to 36 carbon atoms under esterification conditions; or
(iii) is formed by reaction of a C₁₂-C₃₆ fatty acid with at least one of glycerin, ethylene glycol, propylene glycol, pentaerythritol, and polyethylene glycol; or
(iv) is a fatty acid ester of at least one aliphatic alcohol comprising at least one of dodecyl alcohol, tridecyl alcohol, tetradecyl alcohol, pentadecyl alcohol, hexadecyl alcohol, heptadecyl alcohol, octadecyl alcohol, nonadecyl alcohol, eicosyl alcohol, heneicosyl alcohol and docosyl alcohol.

12. The tire of claim 7 or 8 wherein the additive comprises the ester of formula (II) and wherein the ester comprises at least one of dodecyl, tridecyl, tetradecyl, pentadecyl, hexadecyl, heptadecyl, octadecyl, nonadecyl, eicosyl, heneicosyl, or docosyl esters of any of stearic, oleic, palmitic, 9,12-linoleic, 9,11-linoleic (conjugated linoleic), pinolenic, eicosenoic, palmitoleic, magaric, octadecadienoic, or octadectrienoic acids.

13. The tire of at least one of the previous claims wherein the additive comprises an ester comprising octadecyl octadecanoate.

14. The tire of claim 7 wherein the additive comprises of the amide of the formula (III) and wherein the amide is an saturated or unsaturated monovalent or polyvalent amine.

15. The tire of claim 7 or 14 wherein the amide comprises at least one of caprylamide, laurylamide, palmitylamide, stearylamide, oleamide and myristylamide.

## Patentansprüche

1. Luftreifen, umfassend eine Lauffläche (6), zwei Seitenwände (5), die sich individuell und getrennt von einem Umfangsrand der Lauffläche (6) bis zu einem Paar Wulstkerne (3) radial einwärts erstrecken, und eine Karkasse, welche die Lauffläche (6) und die Seitenwände (5) trägt, wobei die Karkasse mindestens eine kordverstärkte Kauschuklage (8) umfasst, die sich durch einen Zenitbereich (4) des Reifens (1) von Wulstkern zu Wulstkern erstreckt, **dadurch gekennzeichnet, dass** die kordverstärkte Karkassenlage (8) sich von axial auswärts von den Wulstkernen (3) bis zu einem jeweiligen Lagenumschlag an der axial inneren Seite der Wulstkerne (3) erstreckt, und wobei eine selbstschmierende Kautschukschicht (13) zwischen der Karkassenlage (8) und mindestens einem der Wulstkerne (3) angeordnet ist.

2. Reifen nach Anspruch 1, wobei die selbstschmierende Kautschukschicht (13) zwischen der Karkassenlage (8) und den Wulstkernen (3) an beiden Seiten des Reifens (1) angeordnet ist.

3. Reifen nach Anspruch 1 oder 2, wobei die selbstschmierende Schicht die Bewegung der Karkassenlage (8) um die Wulstkerne (3) während eines Formens des unvulkanisierten Reifens erleichtert.

4. Reifen nach mindestens einem der vorgenannten Ansprüche, wobei die Karkassenlage (8) sich um die Wulstkerne (3) herum erstreckt und/oder radial über dem radial oberen Ende der Wulstkerne (3) endet.

5. Reifen nach mindestens einem der vorgenannten Ansprüche, wobei der Reifen ein Personenwagenreifen ist und die Karkassenlagenkonstruktion eine von außen nach innen umgeschlagene Lagenkonfiguration ist.

6. Reifen nach mindestens einem der vorgenannten Ansprüche, wobei die Reifenkarkassenlagenkonstruktion oder die Reifenkarkasse unter Ausschluss einer Karkassenkonstruktion mit gespaltener Lage oder einer gespaltenen Karkassenlage ist.

7. Reifen nach mindestens einem der vorgenannten Ansprüche, wobei die selbstschmierende Kautschukschicht (13) eine selbstschmierende Kautschukzusammensetzung umfasst, die mindestens ein dienbasiertes Elastomer und 1 bis 20 ThK mindestens eines Additivs, ausgewählt aus Alkoholen der Formel (I), Estern der Formel (II) und Amiden der Formel (III), umfasst:
R₁-OH (I) 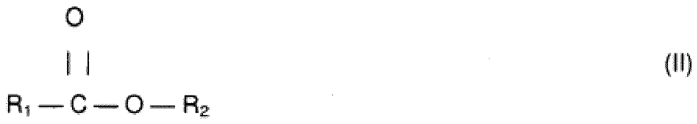 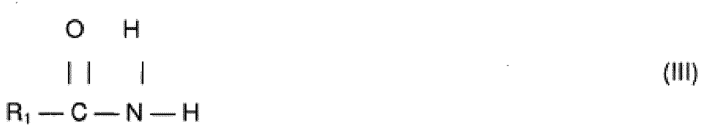
wobei R₁ und R₂ unabhängig aus Alkylradikalen mit 12 bis 36 Kohlenstoffatomen, Alkenylradikalen mit 12 bis 36 Kohlenstoffatomen und Alkadienylradikalen mit 12 bis 36 Kohlenstoffatomen ausgewählt sind.

8. Reifen nach Anspruch 7, wobei das Additiv eine Selbstschmiereigenschaft für die unvulkanisierte Kautschukzusammensetzung der selbstschmierenden Kautschukschicht fördert.

9. Reifen nach Anspruch 7 oder 8, wobei das Additiv der Alkohol der Formel (I) ist und mindestens eines von 1-Dodecanol (Laurylalkohol), 1-Tetradecanol (Myristylalkohol), 1-Hexadecanol (Cetylalkohol), 1-Octadecanol (Stearylalkohol), 1-Eicosanol (Arachidylalkohol), 1-Docosanol (Behenylalkohol), 1-Tetracosanol, 1-Hexacosanol, 1-Octaconsanol, 1-Triacontanol (Melissylalkohol), 1-Dotriacontanol, 1-Tetratriacontanol und Mischungen davon umfasst.

10. Reifen nach Anspruch 9, wobei das Additiv 1-Octadecanol ist, das einen Schmelzpunkt von etwa 58°C und eine durch Gaschromatographie ermittelte Gewichtsverteilung von etwa 0,1 Prozent C₁₄, etwa 1,3 Prozent C₁₆, etwa 95,5 Prozent C₁₈; und etwa 0,9 Prozent C₂₀ aufweist.

11. Reifen nach Anspruch 7 oder 8, wobei das Additiv den Ester der Formel (II) umfasst und wobei der Ester:
(i) ein Produkt der Veresterung von C₁₂-C₃₆-Fettsäuren mit C₁₂-C₃₆-Alkoholen ist; oder
(ii) durch Reaktion der C₁₂-C₃₆-Fettsäure mit einem aliphatischen Alkohol, der 12 bis 36 Kohlenstoffatome aufweist, unter Veresterungsbedingungen gebildet ist; oder
(iii) durch Reaktion einer C₁₂-C₃₆-Fettsäure mit mindestens einem von Glycerin, Ethylenglykol, Propylenglykol, Pentaerythritol und Polyethylenglykol gebildet ist; oder
(iv) ein Fettsäureester mindestens eines aliphatischen Alkohols ist, umfassend mindestens einen von Dodecylalkohol, Tridecylalkohol, Tetradecylalkohol, Pentadecylalkohol, Hexadecylalkohol, Heptadecylalkohol, Octadecylalkohol, Nonadecylalkohol, Eicosylalkohol, Heneicosylalkohol und Docosylalkohol.

12. Reifen nach Anspruch 7 oder 8, wobei das Additiv den Ester der Formel (II) umfasst und wobei der Ester mindestens einen von Dodecyl-, Tridecyl-, Tetradecyl-, Pentadecyl-, Hexadecyl-, Heptadecyl-, Octadecyl-, Nonadecyl-, Eicosyl-, Heneicosyl- oder Docosylestern gleich welcher von Stearin-, Öl-, Palmitin-, 9,12-Linol-, 9,11-Linol- (konjugierten Linol-), Pinolen-, Eicosen-, Palmitolein-, Magarin-, Octadecadien- oder Octadectriensäuren umfasst.

13. Reifen nach mindestens einem der vorgenannten Ansprüche, wobei das Additiv einen Ester umfasst, der Octadecyloctadecanoat umfasst.

14. Reifen nach Anspruch 7, wobei das Additiv aus dem Amid der Formel (III) besteht und wobei das Amid ein gesättigtes oder ungesättigtes einwertiges oder mehrwertiges Amin ist.

15. Reifen nach Anspruch 7 oder 14, wobei das Amid mindestens eines von Caprylamid, Laurylamid, Palmitylamid, Stearylamid, Oleamid und Myristylamid umfasst.

## Revendications

1. Bandage pneumatique comprenant une bande de roulement (6), deux flancs (5) s'étendant de manière individuelle et de manière séparée en direction radiale à l'intérieur de la périphérie de la bande de roulement (6) jusqu'à une paire de tringle de talons (3) et une carcasse supportant la bande de roulement (6) et les flancs (5), dans lequel la carcasse comprend au moins une nappe en caoutchouc (8) renforcée avec des câblés s'étendant d'une tringle de talon à l'autre via la zone de sommet (4) du bandage pneumatique (1), **caractérisé en ce que** la nappe de carcasse (8) renforcée avec des câblés s'étend depuis l'extérieur, en direction axiale, des tringles de talons (3) jusqu'à un retournement de nappe respectif sur le côté interne, en direction axiale, des tringles de talons (3) et dans lequel une couche de caoutchouc autolubrifiante (13) vient se disposer entre la nappe de carcasse (8) et au moins une des tringles de talons (3).

2. Bandage pneumatique selon la revendication 1, dans lequel ladite couche de caoutchouc autolubrifiante (13) vient se disposer entre la nappe de carcasse (8) et les tringles de talons (3) des deux côtés du bandage pneumatique (1).

3. Bandage pneumatique selon la revendication 1, dans lequel ladite couche de caoutchouc autolubrifiante facilite le mouvement de la nappe de carcasse (8) autour des tringles de talons (3) lors de la confection du bandage pneumatique à l'état non vulcanisé.

4. Bandage pneumatique selon au moins une des revendications précédentes, dans lequel la nappe de carcasse (8) s'étend autour des tringles de talons (3) et/ou se termine en direction radiale au-dessus de l'extrémité supérieure, en direction radiale, des tringles de talons (3).

5. Bandage pneumatique selon au moins une des revendications précédentes, dans lequel le bandage pneumatique est un bandage pneumatique de tourisme et la construction de la nappe de carcasse est une configuration de retournement vers le haut, de l'extérieur vers l'intérieur.

6. Bandage pneumatique selon au moins une des revendications précédentes, dans lequel la construction de la nappe de carcasse du bandage pneumatique ou la carcasse du bandage pneumatique ne contient pas une construction de nappe fendue de carcasse ou une nappe de carcasse fendue.

7. Bandage pneumatique selon la revendication 1, dans lequel ladite couche de caoutchouc autolubrifiante (13) comprend une composition de caoutchouc lubrifiante contenant au moins un élastomère à base diénique et de 1 à 20 phr d'au moins un additif choisi parmi des alcools répondant à la formule (I), des esters répondant à la formule (II) et des amides répondant à la formule (III) :
R₁-OH (I) 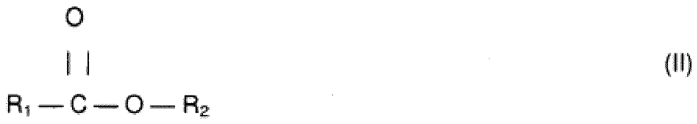 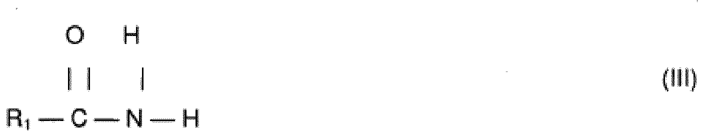
dans laquelle R₁ et R₂ sont choisis de manière indépendante parmi des radicaux alkyle contenant de 12 à 36 atomes de carbone, des radicaux alcényle contenant de 12 à 36 atomes de carbone et des radicaux alcadiényle contenant de 12 à 36 atomes de carbone.

8. Bandage pneumatique selon la revendication 7, dans lequel l'additif fait office de promoteur en ce qui concerne la qualité autolubrifiante pour la composition de caoutchouc non vulcanisé de la couche de caoutchouc autolubrifiante.

9. Bandage pneumatique selon la revendication 7 ou 8, dans lequel l'additif représente l'alcool répondant à la formule (I) et comprend au moins un alcool choisi parmi le groupe comprenant le 1-dodécanol (alcool laurylique), le 1-tétradécanol (alcool myristylique), le 1-hexadécanol (alcool cétylique), le 1-octadéconol (alcool stéarylique), le 1-éicosanol (alcool arachidylique), le 1-docosanol (alcool béhénylique), le 1-tétracosanol, le 1-hexacosanol, le 1-octacosanol, le 1-triacontanol (alcool mélissylique), le 1-dotriacontanol, le 1-tétratriacontanol et leurs mélanges.

10. Bandage pneumatique selon la revendication 9, dans lequel l'additif est le 1-octadécanol possédant un point de fusion d'environ 58 °C et une distribution en poids, déterminée par chromatographie en phase gazeuse, d'environ 0,1 % de C₁₄, d'environ 1,3 % de C₁₆, d'environ 95,5 % de C₁₈, de 95,5 % de [sic], et d'environ 0,9 % de C₂₀.

11. Bandage pneumatique selon la revendication 7 ou 8, dans lequel l'additif comprend l'ester répondant à la formule (II) et dans lequel l'ester :
(i) représente un produit d'estérification d'acides gras en C₁₂-C₃₆ avec des alcools en C₁₂-C₃₆ ; ou
(ii) est obtenu par réaction de l'acide gras en C₁₂-C₃₆ avec un alcool aliphatique contenant de 12 à 36 atomes de carbone dans des conditions d'estérification ; ou
(iii) est obtenu par réaction de l'acide gras en C₁₂-C₃₆ avec au moins un élément choisi parmi le groupe comprenant le glycérol, l'éthylèneglycol, le propylèneglycol, le pentaérythritol et le polyéthylèneglycol ; ou
(iv) représente un ester d'acide gras d'au moins un alcool aliphatique comprenant au moins un alcool choisi parmi le groupe comprenant l'alcool dodécylique, l'alcool tridécylique, l'alcool tétradécylique, l'alcool pentadécylique, l'alcool hexadécylique, l'alcool heptadécylique, l'alcool octadécylique, l'alcool nonadécylique, l'alcool éicosylique, l'alcool henéicosylique et l'alcool docosylique.

12. Bandage pneumatique selon la revendication 7 ou 8, dans lequel l'additif comprend l'ester répondant à la formule (II) et dans lequel l'ester comprend au moins un ester choisi parmi le groupe comprenant un ester dodécylique, tridécylique, tétradécylique, pentadécylique, hexadécylique, heptadécylique, octadécylique, nonadécylique, éicosylique, henéicosylique ou docosylique de l'un quelconque d'acide choisi parmi l'acide stéarique, l'acide oléique, l'acide palmitique, l'acide 9,12-linoléique, l'acide 9,11-linoléique (acide linoléique conjugué), l'acide pinolénique, l'acide éicosénoïque, l'acide palmitoléique, l'acide margarinique, l'acide octadécadiénoique ou à l'acide octadécitriénoïque.

13. Bandage pneumatique selon au moins une des revendications précédentes, dans lequel l'additif comprend un ester comprenant l'octadécanoate d'octadécyle.

14. Bandage pneumatique selon la revendication 7, dans lequel l'additif comprend l'amide répondant à la formule (III) et dans lequel l'amide représente une amine monovalente ou polyvalente, saturée ou insaturée.

15. Bandage pneumatique selon la revendication 7 ou 14, dans lequel l'amide comprend au moins un amide choisi parmi le groupe comprenant le caprylamide, le laurylamide, le palmitylamide, le stéarylamide, l'oléamide et le myristylamide.
